# EUROPEAN PATENT APPLICATION

(11) **EP 2 328 382 A1**
(43) Date of publication of application: **01.06.2011**
(21) Application number: 10191211.1
(22) Date of filing: 15.11.2010
(51) Int. Cl.: H04W 92/12, H04J 3/16, H04L 5/00

(54) **Apparatus and method for transmitting radio signal data**

(30) Priority: 27.11.2009 JP 2009270398
(71) Applicant: Fujitsu Limited, Kawasaki-shi, Kanagawa 211-8588 (JP)
(72) Inventor: Tomita, Tetsuo, Kawasaki-shi Kanagawa 211-8588 (JP); Kimura, Bun, Kawasaki-shi Kanagawa 211-8588 (JP)
(74) Representative: Stebbing, Timothy Charles

(57) **Abstract**

A radio-unit controller and plural radio units are connected with each other via a cascade connection in which the radio-unit controller is connected in series to the plural radio units. A set of radio signal data received via an antenna provided for each radio unit is combined into a radio signal data block which is transmitted from the each radio unit to radio-unit controller along the cascade connection. The radio-unit controller combines plural sets of radio signal data each destined for one of the plural radio units into a radio signal data block which is transmitted to each radio unit along the cascade connection. Each radio unit extracts the set of radio signal data destined for the each radio unit from the radio signal data block, and transmits the extracted set of radio signal data via an antenna provided for the each radio unit.

## Description

### FIELD

The present invention relates to an apparatus and method for transmitting radio signal data.

### BACKGROUND

In the case of arranging a large number of small-sized communication areas in a location such as an indoor site or an area under a poor reception condition (for example, an area located between buildings), providing a radio base station for each of the large number of small-sized communication areas requires a huge amount of equipment, thereby decreasing efficiency in equipment investment. Therefore, under normal circumstances, a radio base station is installed in such a manner that the main body of the radio base station is set up at one place, and amplifiers (AMPs) and antennas for transmitting a radio signal are pulled out from the main body. These amplifiers and antennas that have been pulled out from the main body are called, for example, "pulled-out devices".

In the case of a W-CDMA (Wideband Code Division Multiple Access) service or a LTE (Long Term Evolution) service, the main body of the radio base station is connected to pulled-out amplifiers via an optical fiber, and data transmission between the main body of the radio base station and the pulled-out amplifiers is performed using a standardized interface (I/F) called "a CPRI (Common Public Radio Interface)". In the CPRI, the main body of the radio base station is called "Radio Equipment Control (REC)" and the pulled-out amplifier is called "Radio Equipment (RE)".

The connection of a REC to a plurality of REs may be attained by using various methods, such as connecting the REC to each of the plurality of REs in a starburst form with centering the REC (star connection), and connecting the REC to the plurality of REs in series (a cascade connection, or a chain topology). Generally, the star connection is suitable for the case where installed sites of the plurality of REs are separated from each other, whereas the cascade connection is suitable for the case where the installed sites of the plurality of REs are located nearby each other, for example, for the case where the plurality of REs are installed in indoors.

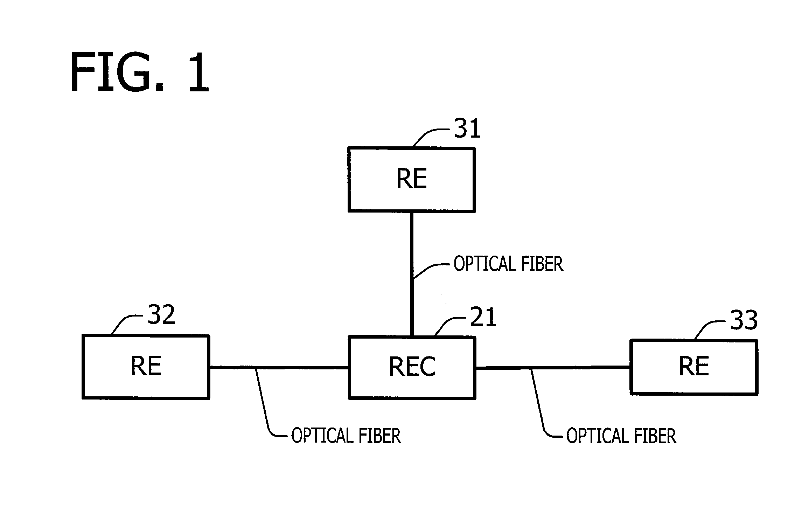

FIG 1 is a diagram illustrating an example of a connection topology in which a REC is connected to a plurality of REs via a star connection. In the star connection depicted in FIG 1, REC 21 is connected to each of REs 31, 32, 33 via an optical fiber. Although FIG. 1 illustrates the example in which a REC is connected to three REs, the number of REs connected to the REC is not limited to three.

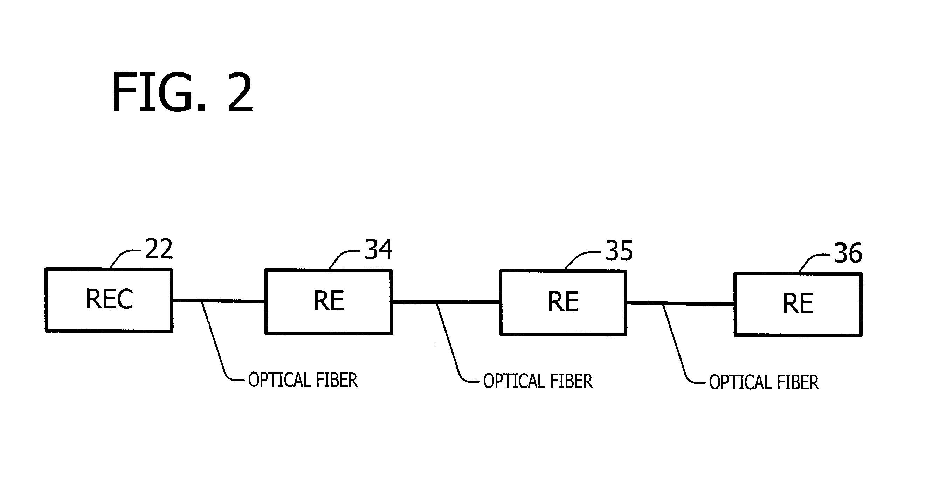

FIG. 2 is a diagram illustrating an example of a connection topology in which a REC is connected to a plurality of REs via a cascade connection. In the cascade connection depicted in FIG 2, REC 22 is connected to RE 34 via an optical fiber, RE 34 is connected to RE 35 via an optical fiber, and RE 35 is connected to RE 36 via an optical fiber. In other words, REC 22 is connected to RE 35 via RE 34, and connected to RE 36 via REs 34, 35. Although FIG 2 illustrates the example in which a REC is connected to three REs, the number of REs connected to the REC is not limited to three. In this case, the direction from REC 22 positioned at the head end of the cascade connection to RE 36 positioned at the tail end of the cascade connection is called "a downward direction". On the other hand, the direction from RE 36 to REC 22 is called "an upward direction".

Japanese Laid-open Patent Publication No. 2002-186017 and 2008-141320 disclose background art regarding a radio base station.

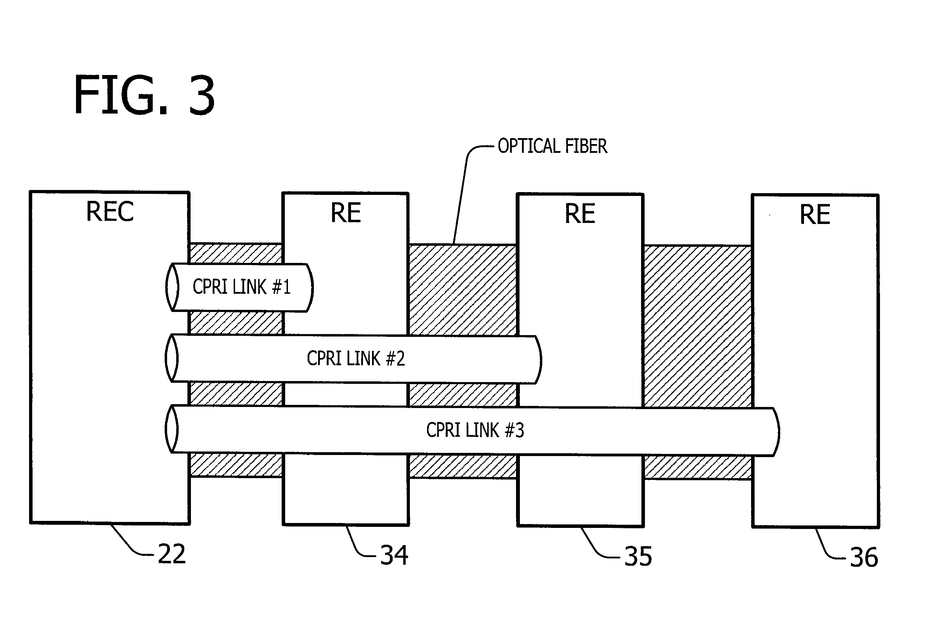

FIG. 3 is a diagram illustrating an example of CPRI link assignments when a REC is connected to a plurality of REs via a cascade connection.

In the case of connecting a REC to a plurality of REs via a cascade connection, one physical line (for example, an optical fiber) generally includes a plurality of communication channels that connect the REC to each of the plurality of REs. As the communication channel between the REC and the plurality of REs, for example, a Common Public Radio Interface (CPRI) may be employed. In the example of FIG. 3, REC 22 is connected to RE 34, RE 35, and RE 36 via CPRI link #1, #2, and #3, respectively.

Here, each communication channel is provided with a frequency bandwidth that complies with the bandwidth of radio channels to be used. The whole physical line is provided with a bandwidth equivalent to the product of a bandwidth value per one communication channel and the number of the plurality of REs connected to the REC via the cascade connection. However, the number of accommodated users is often small in the case of a small-sized communication area. Therefore, in effect, it is rare that whole the bandwidths are used at the same time. This decreases the bandwidth usage efficiency of the physical line including a plurality of communication channels.

Accordingly, it is an object in one aspect of the invention to provide a radio base station capable of reducing bandwidth needed for data transmission between a Radio Equipment Control (REC) and a plurality of Radio Equipments (REs).

### SUMMARY

According to an aspect of the embodiment, there is provided apparatus and method for transmitting radio signal data from a radio-unit controller to a plurality of radio units. The radio-unit controller is connected to the plurality of radio units via a cascade connection in which the radio-unit controller is connected in series to each of the plurality of radio units. The radio-unit controller combines plural sets of radio signal data into a radio signal data block where each of the plural sets of radio signal data is destined for a radio unit that is to transmit via an antenna the each of the plural sets of radio signal data. Further, the radio-unit controller generates mapping information storing position information of memory areas within the radio signal data block that are used for storing the each of the plural sets of radio signal data, in association with a radio-unit identifier identifying a radio unit that is to transmit via an antenna the each of the plural sets of radio signal data. Then, the radio-unit controller transmits the combined radio signal data block and the generated mapping information to a radio unit adjacent in a downward direction along the cascade connection, where the downward direction indicates a direction from the radio-unit controller towards the plurality of radio units along the cascade connection. The each of the plurality of radio units receives the radio signal data block and the mapping information from the radio-unit controller or a radio unit adjacent in an upward direction along the cascade connection, where the upward direction indicating a direction from the plurality of radio units towards the radio-unit controller along the cascade connection. Then, the each of the plurality of radio units extracts, based on the mapping information, a set of radio signal data stored in memory areas within the received radio signal data block that are associated with a radio-unit identifier identifying the each of the plurality of radio units, and transmits the extracted set of radio signal data via an antenna provided for the each of the plurality of radio units. At the same time, the each of the plurality of radio units transmits the radio signal data block and the mapping information to a radio unit adjacent in the downward direction along the cascade connection.

According to another aspect of the embodiment, there is provided apparatus and method for transmitting radio signal data from a plurality of radio units to a radio-unit controller. The radio-unit controller is connected to the plurality of REs via a cascade connection in which the radio-unit controller is connected in series to each of the plurality of radio units. The each of the plurality of radio units receives a set of radio signal data via an antenna provided for the each of the plurality of radio units, and receives a radio signal data block and mapping information from a radio unit adjacent in a downward direction along the cascade connection, where the downward direction indicating a direction from the radio-unit controller towards the plurality of radio units along the cascade connection. Here, the radio signal data block includes memory areas for storing plural sets of radio signal data each being received via an antenna by one of the plurality of radio units, and the mapping information stores position information of memory areas within the radio signal data block that are used for storing the each of the plural sets of radio signal data, in association with a radio-unit identifier identifying a radio unit that has received via an antenna the each of the plural sets of radio signal data. The each of the plurality of radio units updates the mapping information by associating free memory areas within the radio signal data block with a radio-unit identifier identifying the each of the plurality of radio units. Further, the each of the plurality of radio units combines, based on the updated mapping information, the set of radio signal data received via an antenna provided for the each of the plurality of radio units into the radio signal data block, by storing the received set of radio signal data into free memory areas within the radio signal data block that are associated with a radio-unit identifier identifying the each of the plurality of radio units. Then, the each of the plurality of radio units transmits the combined radio signal data block and the updated mapping information to the radio-unit controller or a radio unit adjacent in an upward direction along the cascade connection, where the upward direction indicating a direction from the plurality of radio units towards the radio-unit controller along the cascade connection. The radio-unit controller receives the radio signal data block and the mapping information from a radio unit adjacent in the downward direction along the cascade connection, and extracts, based on the received mapping information, the set of radio signal data received via an antenna provided for the each of the plurality of radio units from the received radio signal data block.

The object and advantages of the invention will be realized and attained by means of the elements and combinations particularly pointed out in the claims.

It is to be understood that both the foregoing general description and following detailed description are exemplary and explanatory and are not restrictive of the invention, as claimed.

### BRIEF DESCRIPTION OF DRAWINGS

FIG 1 is a diagram illustrating an example of a connection topology in which a REC is connected to a plurality of REs via a star connection;

FIG. 2 is a diagram illustrating an example of a connection topology in which a REC is connected to a plurality of REs via a cascade connection;

FIG. 3 is a diagram illustrating an example of CPRI link assignments when a REC is connected to a plurality of REs via a cascade connection;

FIG 4 is a diagram illustrating an example of a system configuration, according to an embodiment;

FIG 5 is a diagram illustrating a configuration example of a radio-unit controller, according to an embodiment;

FIG. 6 is a diagram illustrating a configuration example of a radio unit, according to an embodiment;

FIG. 7 is a diagram illustrating a configuration example of CPRI frames;

FIG. 8 is a schematic diagram illustrating a configuration example of a basic frame;

FIG 9 is a diagram illustrating a configuration example of a basic frame;

FIG 10 is a schematic diagram illustrating an example of a sub-frame;

FIG 11 is a diagram illustrating an example of control words;

FIG. 12 is a diagram illustrating an example of an operational flowchart performed by a scheduler of a radio-unit controller in the case of data transmission in a downward direction, according to an embodiment;

FIG. 13 is a diagram illustrating an example of an operational flowchart of a radio unit in the case of data transmission in a downward direction, according to an embodiment;

FIG 14 is a schematic diagram illustrating an example of data transmission in a downward direction, according to an embodiment;

FIG 15 is a schematic diagram illustrating an example of data transmission in a downward direction, according to an embodiment;

FIGs. 16A and 16B are diagrams illustrating an example of an operational flowchart of a radio unit in the case of data transmission in an upward direction, according to an embodiment;

FIG 17 is a diagram illustrating an example of an operational flowchart performed by a scheduler of a radio-unit controller in the case of data transmission in an upward direction, according to an embodiment; and

FIG. 18 is a schematic diagram illustrating an example of data transmission in an upward direction, according to an embodiment.

### DESCRIPTION OF EMBODIMENTS

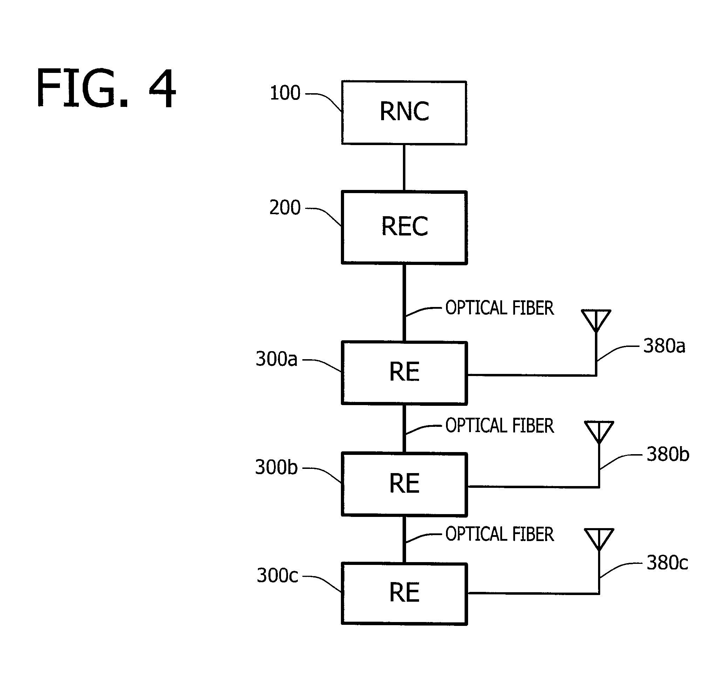

FIG. 4 is a diagram illustrating an example of a system configuration, according to an embodiment. A system according to the embodiment, for example, includes RNC (Radio Network Controller) 100, REC 200, RE 300a, RE 300b, and RE 300c. Here, REC 200 functions as a radio-unit controller, and each of RE 300a, RE 300b, and RE 300c functions as a radio unit. Antennas 380a, 380b, and 380c are connected to REs 300a, 300b, and 300c, respectively. Each of REs 300a, 300b, and 300c (hereinafter, also abbreviated as "RE") has the similar configuration. REC 200 may be connected to RE 300a via an optical fiber, and two adjacent REs may also be connected via an optical fiber. In this way, REC 200 is connected to each of a plurality of REs (REs 300a, 300b, and 300c) via a cascade connection using one physical line, for example, one optical fiber. Here, it is also possible to use other transmission medium such as a coaxial cable instead of an optical fiber.

According to an embodiment, in the case of data transmission in a downward direction, upon receiving from RNC 100 plural sets of radio signal data each destined for one of a plurality of REs, REC 200 combines the plural sets of radio signal data into one radio signal data block, and transmits the combined radio signal data block to each of the plurality of REs via the cascade connection using one communication link. Upon receiving the combined radio signal data block, each of the plurality of REs extracts a set of radio signal data destined for the own device (the each of the plurality of REs) from the received radio signal data block so as to transmit the extracted set of radio signal data via an antenna provided for the own RE, using a radio signal.

Further, in the case of data transmission in an upward direction, each of the plurality of REs combines a set of radio signal data received via an antenna provided for the own RE into a radio signal data block received from one of the plurality of REs adjacent in the downward direction, and transmits the combined radio signal data block to the REC 200 or one of the plurality of REs adjacent in the upward direction, via the cascade connection using one communication channel. Upon receiving the combined radio signal data block, REC 200 extracts each of the plural sets of radio signal data from the combined radio signal data block so as to transmit the extracted set of radio signal data to RNC 100.

Although three REs are depicted in the example of FIG. 4, the number of the plurality of REs is not limited to three.

In FIG. 4, RNC 100, which is connected to REC 200, is depicted as a higher-level device that controls REC 200.

REC 200 is connected to RNC 100 and each of the plurality of REs. REC 200 modulates and demodulates radio signal data that are transmitted to and from RNC 100. REC 200 also modulates and demodulates radio signal data that are transmitted to and from each of the plurality of REs.

Each of the plurality of REs is connected directly or indirectly to REC 200 via the cascade connection. Each of the plurality of REs amplifies a set of radio signal data destined for the own RE that is extracted from the radio signal data block received from REC 200, and transmits the amplified set of radio signal data to a mobile station via an antenna provided for the own RE (the each of the plurality of REs). At the same time, each of the plurality of REs transmits the radio signal data block received from REC 200 to one of the plurality of REs adjacent in the downward direction along the cascade connection.

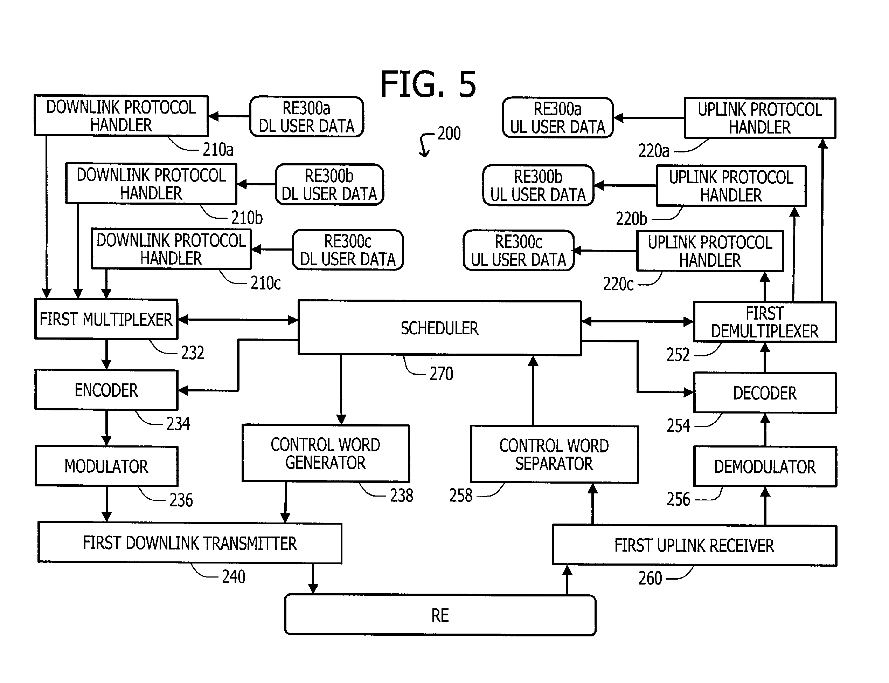

FIG. 5 is a diagram illustrating a configuration example of a radio-unit controller, according to an embodiment. As a radio-unit controller, REC 200 may be configured to include, for example, first multiplexer 232, encoder 234, modulator 236, a control ward generator 238, first downlink transmitter 240, first demultiplexer 252, decoder 254, demodulator 256, first uplink receiver 260, and scheduler 270. Further, REC 200 may be configured to include downlink protocol handlers 210a, 210b, 210c, and uplink protocol handlers 220a, 220b, 220c. In FIG 5, a description of physical interfaces to be connected to physical lines (for example, optical fibers) is omitted. Each part of REC 200 depicted in FIG. 5 may be operated, for example, by causing a processor to execute a program stored in a memory. Further, some parts of REC 200 depicted in FIG. 5 may be configured to include a hardware circuit for performing the function thereof. REC 200 may be configured to include, for example, a processor, a main memory, a secondary memory, and an interface to a peripheral device such as a communication interface. Here, the main memory and the secondary memory may be computer readable recording media.

The processor may be, for example, a CPU (Central Processing Unit) or a DSP (Data Signal Processor). The main memory may be, for example, a RAM (Random Access Memory) or a ROM (Read Only Memory). The secondary memory may be, for example, an EPROM (Erasable Programmable ROM), or an HDD (Hard Disk Drive). Further, the secondary memory may be a removable medium, or a portable recording medium. Here, the removable medium may be, for example, a recording medium such as a USB (Universal Serial Bus) memory, a CD (Compact Disk), or a DVD (Digital Versatile Disk).

REC 200 receives downlink (DL) user data destined for RE 300a from a higher-level apparatus such as RNC 100. Then, downlink protocol handler 210a generates, based on a given communication protocol, a set of radio signal data made up of predetermined information units from the received downlink (DL) user data destined for RE 300a, and sends the generated set of radio signal data to multiplexer 232. In a similar way, downlink protocol handlers 210b and 210c generate, based on a given communication protocol, two sets of radio signal data each made up of a predetermined information unit from the received downlink (DL) user data destined for REs 300b and 300c, respectively, and send the generated two sets of radio signal data to multiplexer 232. Further, REC 200 may be configured to include a downlink protocol handler that generates, based on a given communication protocol, a set of radio signal data made up of a predetermined information unit from the downlink (DL) user data that is destined for all the plurality of REs or destined for a predetermined plural REs included in the plurality of REs.

Multiplexer 232 receives three sets of radio signal data destined for RE 300a, RE 300b, and RE 300c from downlink protocol handlers 210a, 210b, and 210c, respectively. Here, multiplexer 232 includes a transmission buffer, and stores the received sets of radio signal data into the transmission buffer. Then, multiplexer 232 sends the received sets of radio signal data to encoder 234, and notifies scheduler 270 about which one of the plurality of REs the received set of radio signal data is destined for.

Encoder 234 encodes a set of radio signal data received from multiplexer 232 using a predetermined coding scheme, based on the mapping information received from scheduler 270.

Modulator 236 modulates the set of radio signal data encoded by encoder 234 based on a predetermined modulation scheme, and combines the modulated set of radio signal data intro a radio signal data block, for example, an IQ (In-phase Quadrature) data block. The IQ data block stores information on magnitudes and transmission sequence of I (In-phase) and Q (Quadrature) components of plural radio signals that are to be transmitted via an antenna provided for each of the plurality of REs. Hereinafter, an IQ data block will be used as an exemplary radio signal data block.

Control word generator 238 generates control words that include synchronization information for over-the-air synchronization, control data for controlling each of the plurality of REs, and mapping information generated by scheduler 270.

Downlink transmitter 240 transmits the IQ data block (the radio signal data block) generated by modulator 236 and the control words generated by control word generator 238, to RE 300a adjacent in the downward direction along the cascade connection. Downlink transmitter 240 may be configured to include, for example, a physical interface to an optical fiver, a light-emitting element for optical signals, and a driver circuit for driving the light-emitting element.

Uplink receiver 260 receives an IQ data block and control words from RE 300a adjacent in the downward direction along the cascade connection. Then uplink receiver 260 transmits the received control words to control word separator 258, and transmits the received IQ data block to demodulator 256. Uplink receiver 260 may be configured to include, for example, a physical interface to an optical fiver, a light-receiving element for optical signals, and a driver circuit for driving the light-receiving element.

Control word separator 258 extracts mapping information from the received control words, and sends the extracted mapping information to scheduler 270. Further, control word separator 280 may be configured to extract synchronization information and control data from the received control words.

Demodulator 256 demodulates each of plural sets of radio signal data stored in the IQ data block received from uplink receiver 260, based on a demodulation scheme complying with a modulation scheme applied to the each of the sets of radio signal data.

Decoder 254 decodes each of the sets of radio signal data within the IQ data block demodulated by demodulator 256, based on a decoding scheme complying with a coding scheme applied to the each of the sets of radio signal data. Further, according to an instruction from scheduler 270, decoder 254 extracts, from the decoded IQ data block, a set of radio signal data received from each of the plurality of REs, in other words, a set of radio signal data originated from each of the plurality of REs.

First demultiplexer 252 sends a set of radio signal data decoded by decoder 254, to an uplink protocol handler corresponding to one of the plurality of REs from which the set of radio signal data has originated. For example, first demultiplexer 252 sends a set of radio signal data originated from RE 300a to uplink protocol handler 220a.

In the case of data transmission in a downward direction, scheduler 270 receives, from first multiplexer 232, notification indentifying an RE for which the set of radio signal data received by multiplexer 232 destined. Then, scheduler 270 generates scheduling information indicating locations of memory areas within the IQ data block that are used for storing the set of radio signal data received by multiplexer 232. Further, scheduler 270 generates mapping information, based on the notification received from first multiplexer 232 and the generated scheduling information. The mapping information indicates which memory areas within the IQ data block are to be used for storing a set of radio signal data destined for each of the plurality of REs. Scheduler 270 sends the generated mapping information to encoder 234 and to control word generator 238.

In the case of data transmission in an upward direction, scheduler 270 receives mapping information from control word separator 258, and instructs decoder 254 to extract from the received IQ data block data, based on the mapping information, a set of radio signal data originated from each of the plurality of REs.

Upon receiving, from separator 252, a set of radio signal data originated from RE 300a, uplink protocol handler 220a generates uplink user data dedicated to RE 300a based on a predetermined communication protocol. In the similar way, uplink protocol handlers 220b and 220c receive, from separator 252, two sets of radio signal data dedicated to RE 300b and RE 300c, respectively, and generate uplink user data based on a predetermined communication protocol. The generated pieces of uplink user data are transmitted to a higher-level apparatus such as RNC 100.

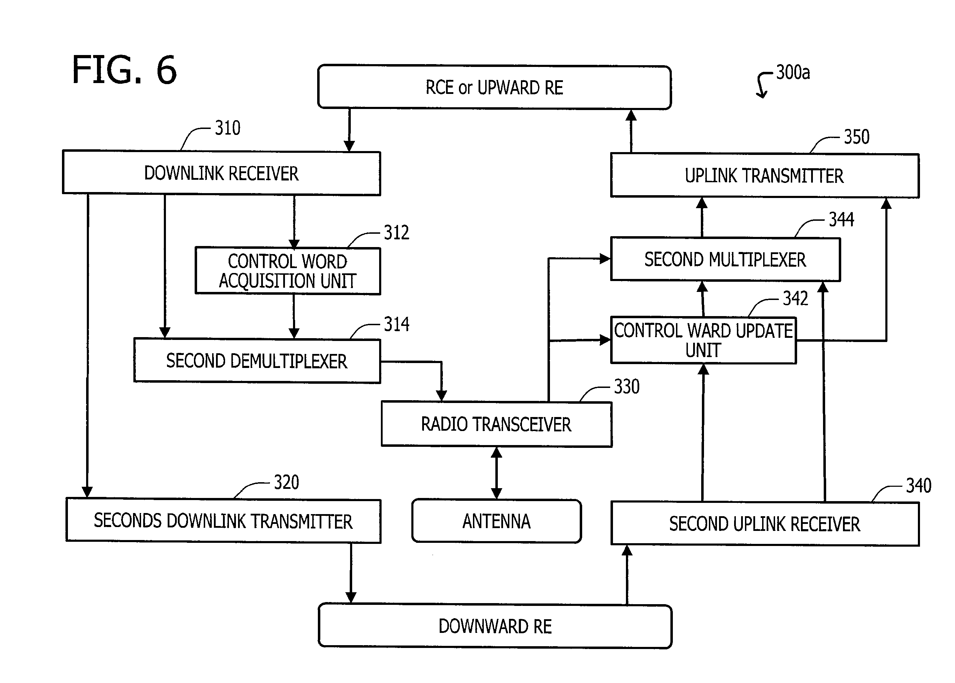

FIG. 6 is a diagram illustrating a configuration example of a radio unit, according to an embodiment. For example, as a radio unit, RE 300a may be configured to include downlink receiver 310, control word acquisition unit 312, second demultiplexer 314, second downlink transmitter 320, radio transceiver 330, second uplink receiver 340, control word update unit 342, second multiplexer 344, and uplink transmitter 350, as depicted in FIG 6. Each of RE 300b and RE 300c has a configuration similar to that of RE 300a. In FIG 6, descriptions on interfaces to the physical line are omitted. Each element of RE 300a depicted in FIG. 6 may be operated, for example, by causing a processor to execute a program that is led into the memory. It is also possible that some of the elements of RE 300a depicted in FIG. 6 are configured to include hardware circuits. A radio unit such as an RE may be configured to include, for example, a processor, a main memory, and an interface part to peripheral devices such as a secondary memory and a communication interface arrangement. The main and secondary memories may be, for example, computer-readable recording media.

Downlink receiver 310 receives an IO data block and control words from REC 200 or an RE adjacent in the upward direction along the cascade connection. Then, downlink receiver 310 sends the received control words to control word acquisition unit 312, and sends the received IQ data block to second demultiplexer 314. At the same time, downlink data receiver 310 sends the received IQ data block and control words to second downlink transmitter 320.

Control word acquisition unit 312 extracts mapping information from the received control words, and sends the extracted mapping information to second demultiplexer 314. Further, control word acquisition unit 312 may be configured to extract, from the control words, information such as synchronization information and control data.

Second demultiplexer 314 receives the IQ data block from downlink receiver 310, and receives the mapping information from control word acquisition unit 312. Then second demultiplexer 314 extracts, based on the received mapping information, a set of radio signal data destined for the own equipment (RE 300a) from the received IQ data block, and sends the extracted set of radio signal data to radio transceiver 330. Here, the extracted radio signal data is stored in a predetermined memory area within a radio-transmission IQ data block different from the IQ data block, and the radio-transmission IQ data block is sent to radio transceiver 330.

Second downlink transmitter 320 transmits the IQ data block and the control words received from downlink receiver 310 to one of the plurality of REs adjacent in the downward direction along the cascade connection.

In the case of data transmission in the downward direction, radio transceiver 330 transmits via antenna 380a the set of radio signal data stored in the radio-transmission IQ data block by amplifying a radio signal up to a given transmission power level based on the set of radio signal data.

In the case of data transmission in the upward direction, radio transceiver 330 builds a radio-transmission IQ data block storing a set of radio signal data received via antenna 380a, and sends the radio-transmission IQ data block to control word update unit 342 and multiplexer 344.

Uplink receiver 340 receives an IQ data block and control words from an RE adjacent in the downward direction along the cascade connection. Then uplink receiver 340 sends the received control words to control word update unit 342, and sends the received IQ data block to second multiplexer 344.

Control word update unit 342 extracts mapping information from the received control words. Further, control word update unit 342 allocates free memory areas within the IQ data block to the radio signal data received from radio transceiver 330 by referring to the extracted mapping information. Then, control word update unit 342 updates the mapping information according to the allocation result of the free memory areas, and sends the updated mapping information to second multiplexer 344. Further, control word update unit 342 generates control words including the updated mapping information, and sends the generated control words to uplink transmitter 350.

Second multiplexer 344 stores, based on the received mapping information, a set of radio signal data received from radio transceiver 330 into the IQ data block received from second uplink receiver 340. Then, second multiplexer 344 sends, to uplink transmitter 350, the IQ data block storing the set of radio signal data received from radio transceiver 330.

Uplink transmitter 350 transmits the control words received from control word update unit 342 and the IQ data block received from second multiplexer 344, to REC 200 or an RE adjacent in the upward direction along the cascade connection.

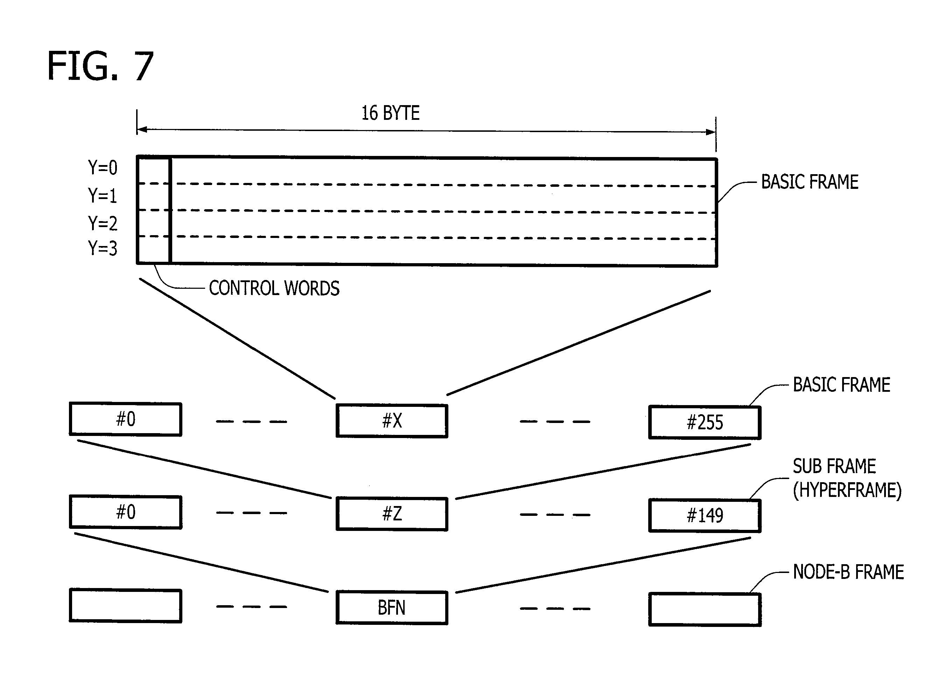

FIG 7 is a diagram illustrating a configuration example of CPRI frames. CPRI frames are configured in a hierarchical structure in which a Node-B frame includes plural hyper frames, and a hyper frame (or a sub-frame) includes plural basic frames, as depicted in FIG 7. Here, the CPRI frames are transmitted between a REC and one or more REs via a cascade connection.

One Node-B frame has a frame length comparable to a duration time of 10 ms (millisecond). One radio-frame includes 150 sub-frames (or hyper frames). Each of the 150 sub-frames is assigned, as an index, an integer value Z ranging from 0 to 149. One sub-frame includes 256 basic frames, and each of the 256 basic frames is assigned, as an index, an integer value X ranging from 0 to 255.

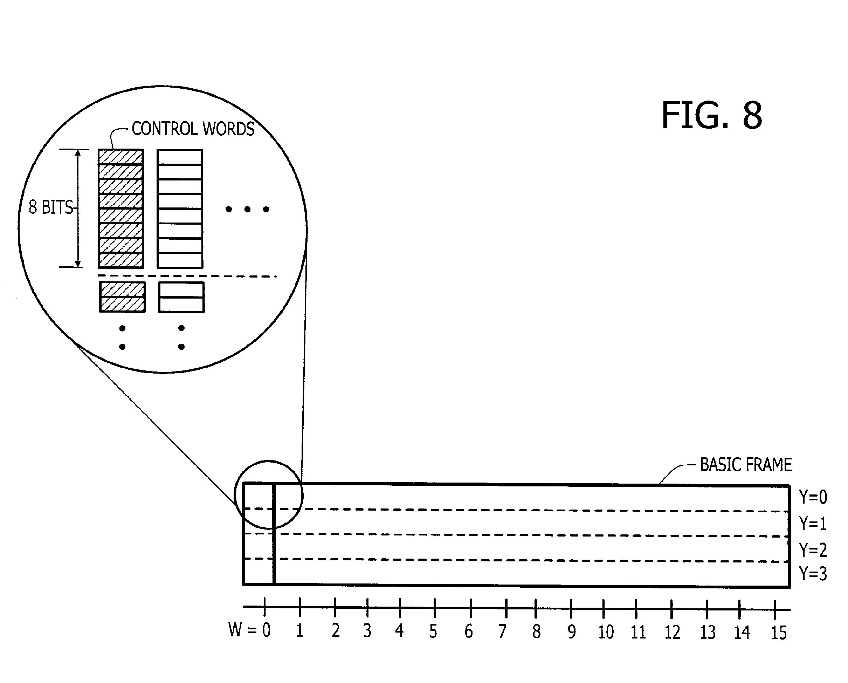

FIG. 8 is a schematic diagram illustrating a configuration example of a basic frame. A basic frame includes four data units each having a length of 16 bytes. Each of the four data units is assigned, as an index, an integer value Y ranging from 0 to 3. The head byte of each data unit is defined as a control word (CW), and IQ (In-phase Quadrature) data is stored, as radio signal data, in the remaining 15 bytes of each data unit.

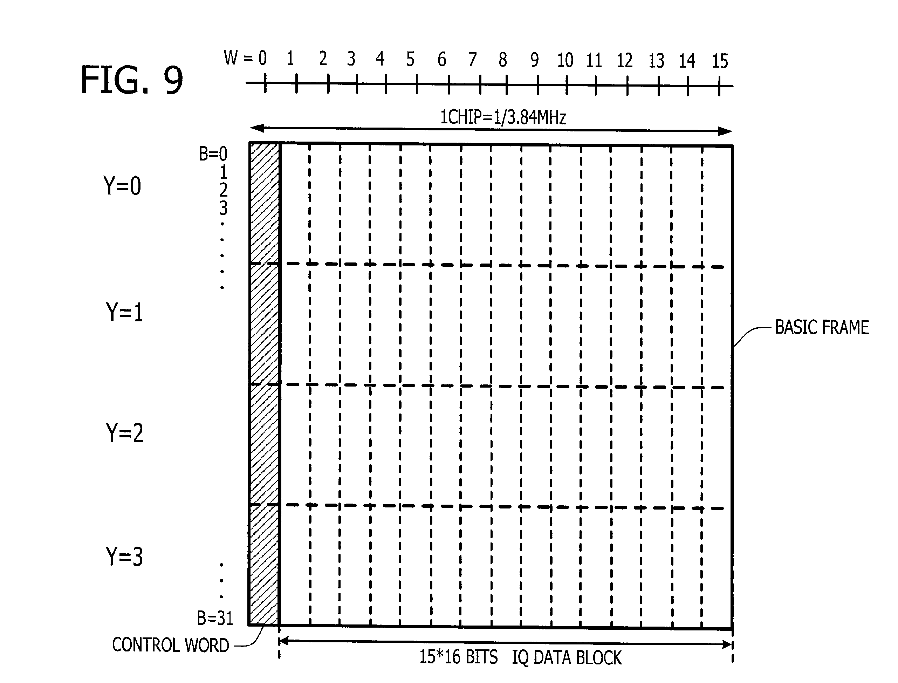

FIG 9 is a diagram illustrating a configuration example of a basic frame. A data unit in a basic frame has a length of 16 bytes. In the example of FIG. 9, the basic frame includes four data units. Further, the basic frame includes 16 words each of which is assigned, as an index, an integer value W ranging from 0 to 15. In the example of FIG. 9, one word is four bytes on length, and each bit of the word is assigned, as an index, an integer value B ranging from 0 to 32. The word of index value "0" is a control word, and the words of index values from "1" to "15" constitute an IQ data block in which IQ data are to be stored as radio signal data.

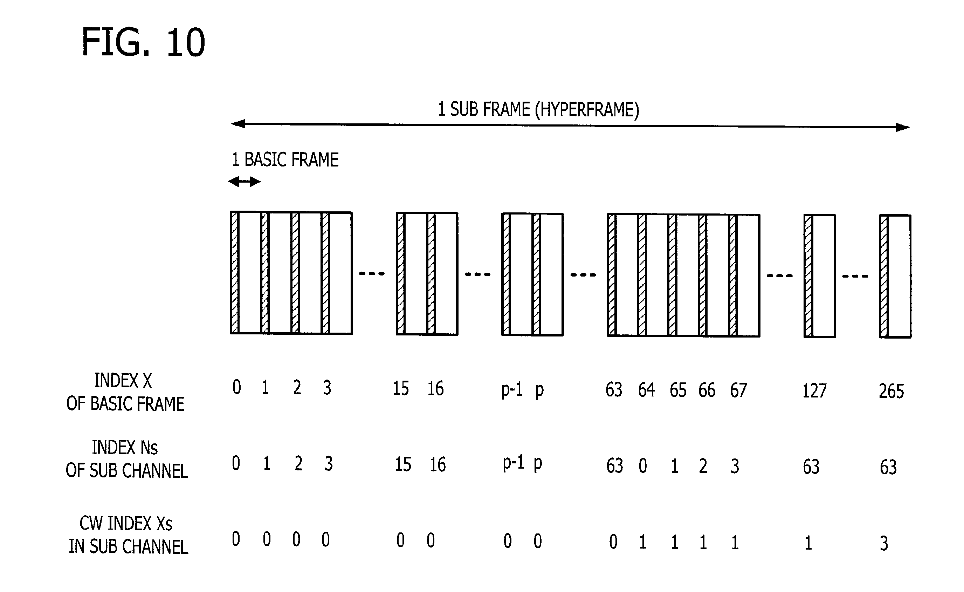

FIG. 10 is a schematic diagram illustrating an example of a sub-frame (or a hyper frame). A sub-frame includes 256 basic frames.

Within one sub-frame, an integer value X ranging from 0 to 255 is assigned, as an index, to each of control words of basic frames. The 256 basic frames are organized into 64 sub-channels each assigned, as an index, an integer value Ns ranging from 0 to 63. Further, within one sub-channel, an integer value Xs ranging from 0 to 3 is assigned, as an index, to each of control words of basic frames.

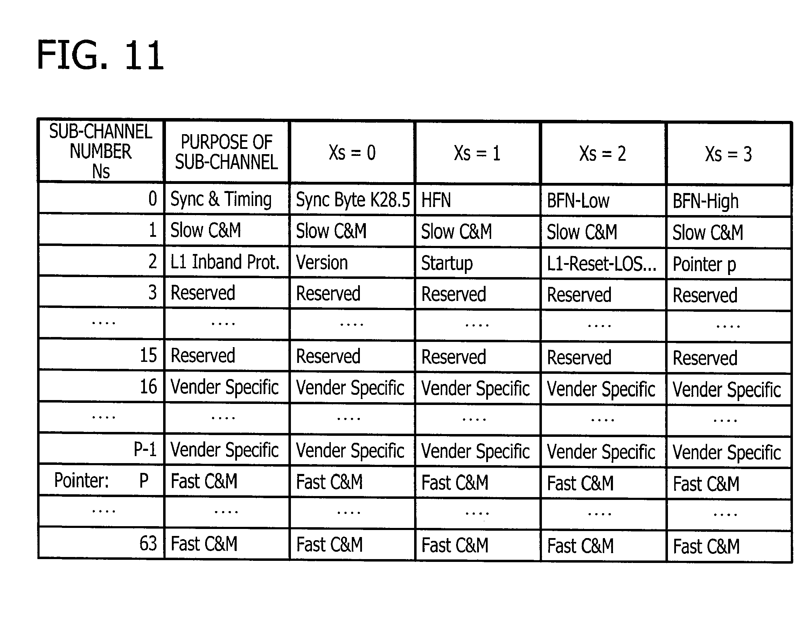

FIG 11 is a diagram illustrating an example of control words. Control words of a sub-channel (a hyper frame) become meaningful as a header by organizing 256 basic frames into 64 sub-channels (Ns = 0, 1, ..., 63). For example, a type of a control signal is determined for each sub-channel as a purpose of the sub-channel.

According to an embodiment, mapping information identifies correspondence between memory areas within the IQ data block and the plurality of REs, and indicates which memory areas within the IQ data block is dedicated to which one of the plurality of REs. Which memory areas within the IQ data block is dedicated to which one of the plurality of REs, may be defined, for example, by associating a radio-unit identifier identifying one of the plurality of radio units (REs) with position information (for example, start and end positions of the memory areas) identifying the memory areas within the IQ data block. The position information may de specified, for example, by indexes used within a sub-frame. Mapping information may be configured to be stored in control words, for example, in reserved areas or vender specific areas in the control words as depicted in FIG. 11.

Further, a radio-unit identifier may be configured to identify all the plurality of radio units (REs), or to identify all the predetermined plural radio units (REs) included in the plurality of radio units (REs). A radio-unit identifier identifying plural radio units included in the plurality of radio units will be hereinafter called "a multi-address identifier". Use of a multi-address identifier allows REC 200 to integrate two or more sets of radio signal data destined for the plural REs into one set of radio signal data, thereby attaining effective use of memory areas within an IQ data block. Further, use of a multi-address identifier may reduce the amount of processing to be executed by REC 200.

Next, description will be given of an operation example of a radio-unit controller in the case of data transmission in a downward direction, according to an embodiment.

Downlink protocol handler 210a of REC 200 receives downlink (DL) user data destined for RE 300a from a higher-layer apparatus such as RNC 100, and generates a set of radio signal data made up of predetermined information units from the received downlink user data destined for RE 300a based on a given communication protocol. Then, downlink protocol handler 210a sends the generated set of radio signal data to multiplexer 232. Other down stream protocol handlers 210b, 210c also generate two sets of radio signal data made up of predetermined information units from the received downlink user data, and send the generated sets of radio signal data to multiplexer 232 in a manner similar to downlink protocol handler 210a.

First multiplexer 232 receives sets of radio signal data destined for RE 300a, 300b, and 300c from downlink protocol handlers 210a, 210b, and 210c, respectively, and stores the received sets of radio signal data into a transmission buffer. Then, first multiplexer 232 notifies scheduler 270 of information indicating which one of the plurality of REs each of the received sets of radio signal data is destined for.

Scheduler 270 assigns memory areas within an IP data block to each of the received sets of radio signal data. Further, scheduler 270 generates mapping information for each sub-frame (or hyper frame) to be transmitted. Here, a sub-frame is generated and transmitted every 66.67 ns (10/150 ms).

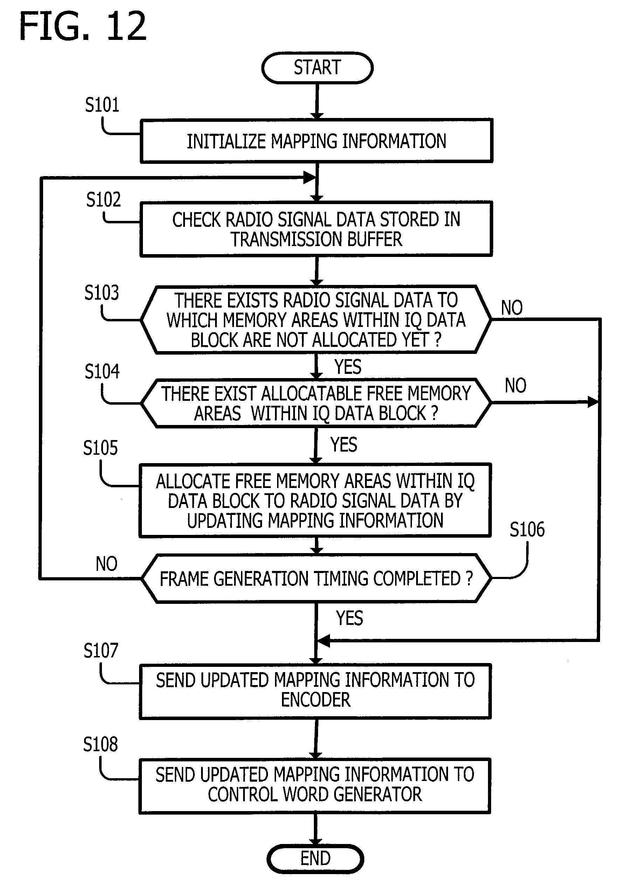

FIG 12 is a diagram illustrating an example of an operational flowchart performed by a scheduler of a radio-unit controller in the case of data transmission in a downward direction, according to an embodiment. The operational flowchart of FIG. 12 is invoked at the start of frame generation timing for a sub-frame.

Scheduler 270 initializes mapping information (S101). Here, the mapping information indicates which memory areas within an IQ data block is used for storing a set of radio signal data destined for one of the plurality of REs.

Scheduler 270 checks radio signal data stored in the transmission buffer of first multiplexer 232 (S 102). The transmission buffer of first multiplexer 232 temporally stores plural sets of radio signal data that have been sent from downlink protocol handlers 210a, 210b, and 210c, and are destined for RE 300a, RE 300b, and RE 300c, respectively. Upon receiving sets of radio signal data, RE 300a, RE 300b, and RE 300c transmit the received sets of radio signal data via antenna 380a, 380b, and 380c, respectively, by amplifying radio signals up to a predetermined transmission power level.

Scheduler 270 checks whether there exist a set of radio signal data stored in the transmission buffer to which memory areas within the IQ data block are not allocated (S103). When there exist no sets of radio signal data stored in the transmission buffer to which memory areas within the IQ data block is not allocated yet (S103; NO), scheduler 270 proceeds to operation S107.

When there exists a set of radio signal data stored in the transmission buffer to which memory areas within the IQ data block are not allocated yet (S103; YES), scheduler 270 checks whether there exist free memory areas within the IQ data block that are able to be allocated to the set of radio signal data stored in the transmission buffer (S104). Here, scheduler 270 checks whether there exist free memory areas within the IQ data block, based on the mapping information. When there exist no free memory areas left within the IQ data block (S 104; NO), scheduler 270 proceeds to operation S107.

When there exist free memory areas within the IQ data block that are able to be allocated to the set of radio signal data in the transmission buffer (S104; YES), scheduler 270 allocates the free memory areas to the set of radio signal data in the transmission buffer (S105). The scheduler 270 stores, in the mapping information, a radio-unit identifier identifying one of the plurality of REs in association with position information of the allocated memory area within the IQ data block in which the set of radio signal data is stored. When there exist plural sets of radio signal data in the transmission buffer, scheduler 270 allocates free memory areas within the IQ data block to each of the plural sets of radio signal data, by storing the relevant information in the mapping information.

Scheduler 270 determines whether frame generation timing for a sub-frame has completed or not (S106). When the frame generation timing has not completed (S106; NO), scheduler 270 returns to operation S102.

When the frame generation timing has completed (S 106; YES), scheduler 270 sends the updated mapping information to encoder 234 (S107). Further, scheduler 270 sends the updated mapping information to control word generator 238 (S108). In the above operational sequence, it is also possible to exchange the execution order of operations S107 and S108.

Encoder 234 encodes a set of radio signal data received from multiplexer 232, using a predetermined encoding scheme, based on the mapping information received from scheduler 270. Modulator 236 modulates the set of radio signal data encoded by encoder 234, using a predetermined modulation scheme, so as to generate an IQ data block.

Control word generator 238 generates control words that includes the mapping information received from scheduler 270, synchronization information for over-the-air synchronization, and control data for controlling each of the plurality of REs.

First downlink transmitter 240 transmits the IQ data block generated by modulator 236 and the control words generated by control word generator 238 to RE 300a adjacent in the downward direction along the cascade connection. Here, the control words include the mapping information generated by scheduler 270.

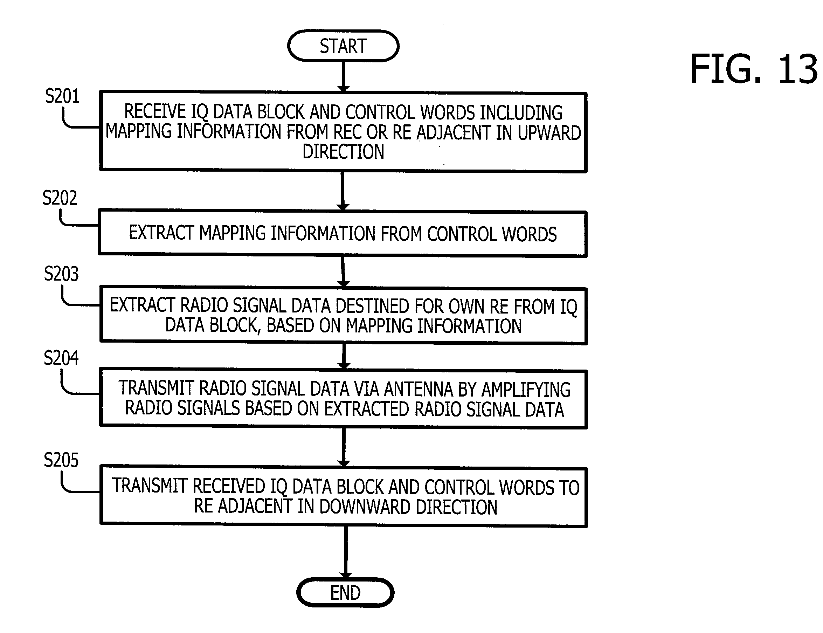

FIG 13 is a diagram illustrating an example of an operational flowchart of a radio unit in the case of data transmission in a downward direction, according to an embodiment. Here, although the description will be given of an operational flowchart for RE 300a as a representative example of a radio unit, the same applies to other REs: RE 300b and RE 300c.

The operational flowchart depicted in FIG. 13 may be invoked when RE 300a has received an IQ data block and control words from REC 200 or an RE adjacent in the upward direction.

Downlink receiver 310 of a radio unit receives a radio signal data block and control words from a radio-unit controller or a radio unit adjacent in the upward direction along the cascade connection. In the case, downlink receiver 310 of RE 300a receives an IQ data block (as a radio signal data block) and control words from REC 200 (S201). Downlink receiver 310 sends the received IQ data block and control words to second downlink transmitter 320. At the same time, downlink receiver 310 sends the received IQ data block to second demultiplexer 314, and sends the received control words to control word acquisition unit 312.

Control word acquisition unit 312 extracts mapping information from the received control words (S202), and sends the extracted mapping information to second demultiplexer 314.

Second demultiplexer 314 extracts a set of radio signal data destined for the own equipment (RE 300a) from the received IQ data block, based on the mapping information (S203), and sends a radio-transmission IQ data block storing the extracted set of radio signal data to radio transceiver 330. Radio transceiver 330 transmits the extracted set of radio signal data via antenna 380a by amplifying radio signals up to a given transmission power level based on the extracted set of radio signal data (S204).

Second downlink transmitter 320 transmits the received IQ data block and control words to an RE adjacent in the downward direction along the cascade connection (S205).

In the above operational sequence, it is also possible to exchange the order of operation S202 and S204.

According to the operational flowchart of FIG 13, RE 300a extracts a set of radio signal data destined for RE 300a from the IQ data block, based on the mapping information, and transmits the extracted set of radio signal data via antenna 380a. Further, RE 300a transmits the received IQ data block and control words to one of the plurality of REs adjacent in the downward direction along the cascade connection. Here, the IQ data block and control words generated by REC 200 are transmitted without change via RE 300a to an RE adjacent to RE 300a in the downward direction along the cascade connection.

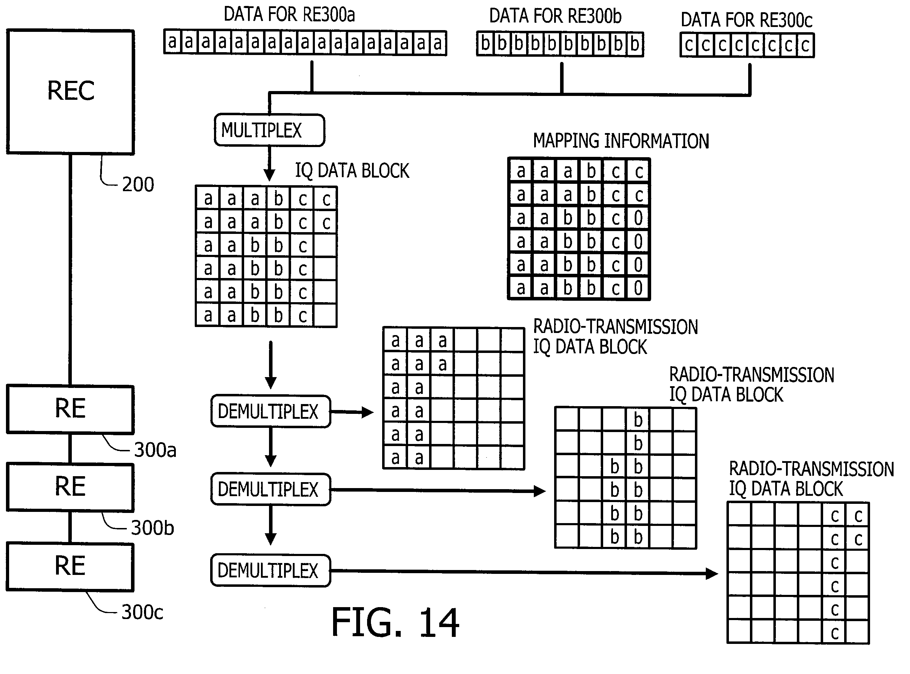

FIG. 14 is a schematic diagram illustrating an example of data transmission in a downward direction, according to an embodiment.

In the example of FIG. 14, REC 200 multiplexes three sets of radio signal data destined for RE 300a, 300b, and 300c into one communication channel by combining the three sets of radio signal data into one IQ data block. In FIG. 14, a cell depicted within an IQ data block indicates a memory area within the IQ data block. And, cells labeled by "a", "b", and "c" within the IQ data block indicate memory areas for storing three sets of radio signal data destined for RE 300a, RE 300b, and RE 300c, respectively. Blank spaces in the cells within the IQ data block indicate that there exists no radio signal data stored in the corresponding memory area. Cells depicted within mapping information correspond to memory areas within the IQ data block, on the one-to-one basis. Cells labeled by "a", "b", and "c" within the mapping information indicate that the corresponding memory areas within the IQ data block are destined for RE 300a, RE 300b, and RE 300c, respectively. Cells labeled by "0" within the mapping information indicate that the corresponding memory areas within the IQ data block are not used currently.

REC 200 generates mapping information indicating which memory areas within the IQ data block are used for storing a set of radio signal data destined for one of the plurality of REs, as mentioned above.

REC 200 transmits an IQ data block and control words including mapping information to each of the plurality of REs.

RE 300a receives, from REC 200, the IQ data block and the control words including the mapping information. RE 300a extracts a set of radio signal data destined for RE 300a (cells labeled by "a" in the IQ data block of FIG. 14), and the extracted set of radio signal data is stored into memory areas within a radio-transmission IQ data block which is transmitted to radio transceiver 330. Then, radio transceiver 330 of RE 300a transmits the set of radio signal data stored in the radio-transmission IQ data block via antenna 380a, to communication devices such as a mobile terminal. In the example of FIG 14, the set of radio signal data destined for RE 300a is stored in memory areas within the radio-transmission IQ data block that are located at the same position as those within the IQ data block. At the same time, RE 300a transmits the IQ data block and the control words including the mapping information to RE 300b. In FIG. 14, cells labeled by "a" in the IQ data block indicate a set of radio signal data that is to be transmitted via antenna 380a.

RE 300b and RE 300c handle an IQ data block and control words including mapping information that have originated from REC 200 in a manner similar to RE 300a.

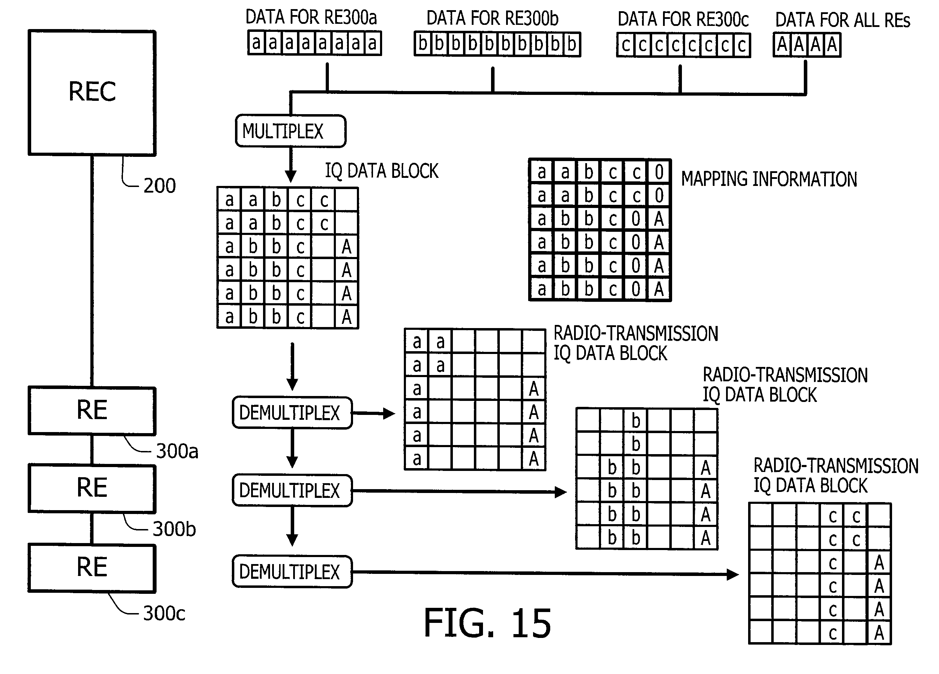

FIG. 15 is a schematic diagram illustrating an example of data transmission in a downward direction, according to an embodiment.

In the example of FIG. 15, REC 200 multiplexes three sets of radio signal data destined for RE 300a, RE 300b, RE 300c, and a set of radio signal data destined for three REs included in the plurality of REs (RE 300a, RE 300b, RE 300c) into one communication channel by combining them into one IQ data block. In FIG. 15, labels "a", "b", and "c" have the same meaning as in the case of FIG. 14. Cells labeled by "A" indicate a set of radio signal data destined for all the plurality of REs (RE 300a, RE 300b, RE 300c), and a label "A" depicted within mapping information is a multi-address identifier identifying all the plurality of REs, meaning that the corresponding memory areas of the IQ data block are used for storing a set of radio signal data destined for all the plurality of REs.

RE 200 generates mapping information storing radio-unit identifiers in association with position information of memory areas within the IQ data block. That is, the mapping information defines correspondence between memory areas within the IQ data block and radio-unit identifiers identifying one of the plurality of REs or all the plurality of REs. In the example of FIG. 15, radio-unit identifiers "a", "b", "c", and "A" depicted in the mapping information indicates that the corresponding memory areas within the IQ data block are destined for RE 300a, RE 300b, RE 300c, and all the plurality of REs, respectively.

RE 300a receives, from REC 200, the IQ data block and the control words including the mapping information. RE 300a extracts a set of radio signal data destined for RE 300a (radio signal data labeled by "a" in the IQ data block of FIG. 15) and a set of radio signal data destined for all the plurality of REs (radio signal data labeled by "A" in the IQ data block of FIG. 15), and the extracted radio signal data are stored into memory areas within a radio-transmission IQ data block which is transmitted to radio transceiver 330 of RE 300a. Then, radio transceiver 330 of RE 300a transmits the set of radio signal data stored in the radio-transmission IQ data block via antenna 380a to communication devices such as a mobile terminal. At the same time, RE 300a transmits the IQ data block and the control words including the mapping information that have been received from REC 200, to RE 300b.

RE 300b and RE 300c handle an IQ data block and control words including mapping information that have originated from REC 200, in a manner similar to RE 300a.

Each of the plurality of REs may be configured to extract, from the radio-transmission IQ data block, a set of radio signal data destined for the own equipment and a set of radio signal data destined for all the plurality of REs, and to transmit the extracted sets of radio signal data via an antenna to communication devices such as a mobile terminal.

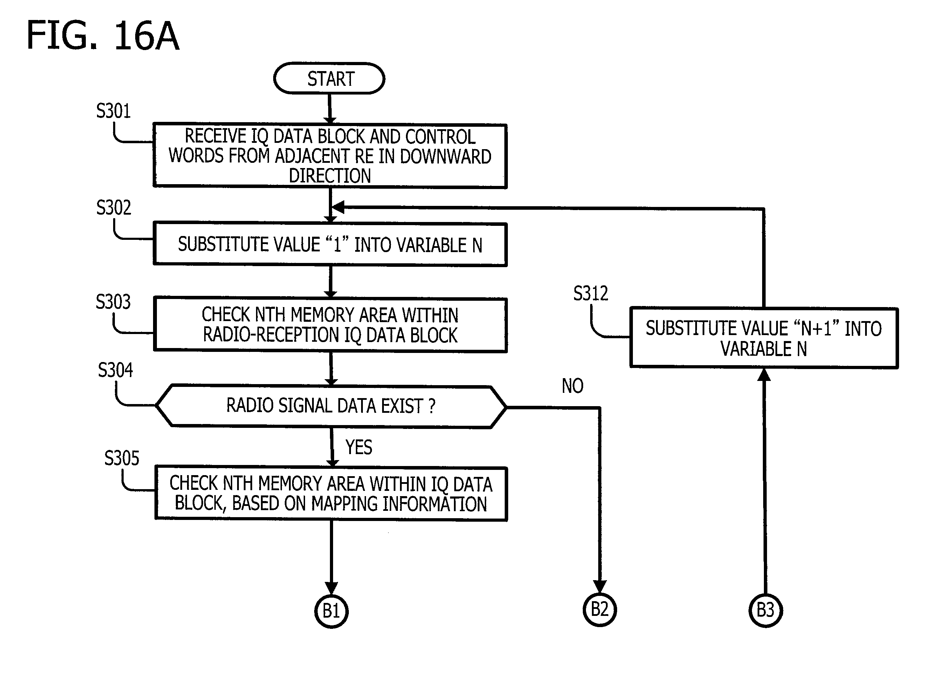

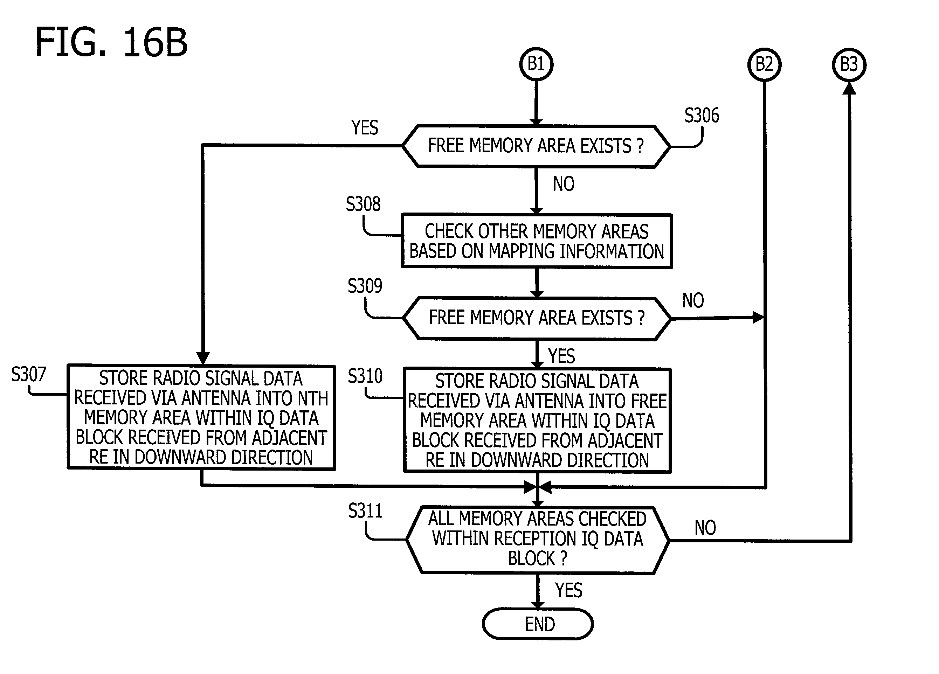

FIGs. 16A and 16B are diagrams illustrating an example of an operational flowchart of a radio unit in the case of data transmission in an upward direction, according to an embodiment. Connection terminals "B1", "B2", and "B3" depicted in FIG 16A are connected to connection terminals "B1", "B2", and "B3" depicted in FIG. 16B, respectively. Hereinafter, description will be given of an operational flowchart of RE 300a. Operational flowcharts for the other REs are essentially the same as that of RE 300a, and the descriptions about the other REs will be omitted here.

The operational flowchart of FIGs. 16A and 16B may be invoked at frame generating timing for a sub-frame, in this case every 66.67 ns (10/150 ms).

Second uplink receiver 340 of RE 300a receives an IQ data block and control words from an RE adjacent in the downward direction along the cascade connection (5301). Then, second uplink receiver 340 sends the received IQ data block to second multiplexer 344, and sends the received control words to control word update unit 342. Control word update unit 342 extracts mapping information from the received control words.

Radio signals received via antenna 380a are amplified by radio transceiver 330, and stored as a set of radio signal data into memory areas within a radio-reception IQ data block which is then transmitted to second multiplexer 344 and control word update unit 342.

Control word update unit 342 substitutes value "1" into variable N (S302). Then, control word update unit 342 checks Nth memory area within the radio-reception IQ data block received from radio-transceiver 330 (S303). When there exists no radio signal data in the Nth memory area within the radio-reception IQ data block (S304; NO), control word update unit 342 proceeds to operation S311 depicted in FIG. 16B.

When there exists radio signal data in the Nth memory area within the radio-reception IQ data block (S304; YES), control word update unit 342 checks, based on the mapping information, the Nth memory area within the IQ data block received from an RE adjacent in the downward direction (S305). Here, the size of a memory area within the radio-reception IQ data block is equal to the size of a memory area within the IQ data block received from the RE adjacent in the downward direction, and the number of memory areas within the radio-reception IQ data block is equal to the number of memory areas within the IQ data block received from the adjacent RE in the downward direction.

When the Nth memory area within the IQ data block received from the adjacent RE in the downward direction is a free memory area (S306; YES), control word update unit 342 allocates the free memory area of the IQ data block (the Nth memory area) for the own equipment (RE 300a). Then, control word update unit 342 stores, into the mapping information, a radio-unit identifier identifying RE 300a in association with position information identifying the allocated memory area (the Nth memory area), and instructs second multiplexer 344 to store a piece of radio signal data received via antenna 380a into the Nth memory area within the IQ data block received from the adjacent RE in the downward direction. Then, second multiplexer 344 stores the piece of radio signal data stored in the Nth memory area within the radio-reception IQ data block, into the Nth memory area within the IQ data block received from uplink receiver 340, that is, received from the adjacent RE in the downward direction (S307).

When the Nth memory area within the IQ data block received from the adjacent RE in the downward direction is not a free memory area (S306; NO), control word update unit 342 search the IQ data block received from the adjacent RE in the downward direction, for a free memory area (S308). Here, a memory area that has been already allocated to the own equipment (RE 300a) is not searched for as a free memory area.

When there exists a free memory area in the IQ data block received from the adjacent RE in the downward direction (S309; YES), control word update unit 342 allocates the free memory area to the own equipment (RE 300a). At the same time, control word update unit 342 stores a radio-unit identifier identifying RE 300a in association with position information identifying the allocated free memory area. Then, control word update unit 342 instructs second multiplexer 344 to store the radio signal data received via antenna 380a into the allocated free memory area. Second multiplexer 344 stores the radio signal data stored in the Nth memory area within the radio-reception IQ data block, into the free memory area within the IQ data block received from uplink receiver 340 (or received from the adjacent RE in the downward direction) (5310).

When there exist no free memory areas within the IQ data block received from the adjacent RE in the downward direction (S309; NO), control word update unit 342 proceeds to operation 5311. In this case, the radio signal data that was received via antenna 380a and stored in the radio-reception IQ data block fails to be stored in a memory area within the IQ data block received from the adjacent RE in the downward direction, and may be stored into a free memory area within an IQ data block that will be received from the adjacent RE in the downward direction at the next frame timing. Further, when there exist no free memory areas within the IQ data block received from the adjacent RE in the downward direction (S309; NO), RE 300a is unable to allocate a free memory area for the own equipment at this frame timing. Therefore, in this case, control word update unit 342 may be configured to proceed to another processing instead of proceeding to operation S311.

Control word update unit 342 determines whether processing has completed on all the memory areas with the radio-reception IQ data block (S311). When processing has not completed yet on all the memory areas within the radio-reception IQ data block (S311; NO), control word update unit 342 substitutes value "N+1" into variable N (S312), and returns to operation S303.

When processing has completed on all the memory areas within the radio-reception IQ data block (S311; YES), control word update unit 342 generates control words including the updated mapping information, and sends the generated control words to uplink transmitter 350. Second multiplexer 344 sends the generated IQ data block to uplink transmitter 350 according to the instruction received from control word update unit 342.

Uplink transmitter 350 transmits the IQ data block received from second multiplexer 344 and the control words received from control word update unit 342, to REC 200 or the adjacent RE in the upward direction.

In this way, RE 300a generates an IQ data block by adding the radio signal data that was received via antenna 380a and stored in the radio-reception IQ data block, to the IQ data block received from the adjacent RE in the downward direction, and generates control words by updating the mapping information included in the received control words. Then, RE 300a transmits the generated IQ data block and the generated control words to RE 200.

An RE positioned at the end of the cascade connection (for example, RE 300c) generates control words including mapping information that stores a radio-unit identifier identifying the RE (the own equipment) in association with position information identifying memory areas within the IQ data block that stores a set of signal data received via the antenna of the RE (the own equipment) since there exist no REs adjacent in the downward direction along the cascade connection. Then, the RE generates an IQ data block based on the generated mapping information, and transmits the generated control words and the generated IQ data block storing the set of radio signal data received via the antenna thereof to an RE adjacent in the upward direction along the cascade connection.

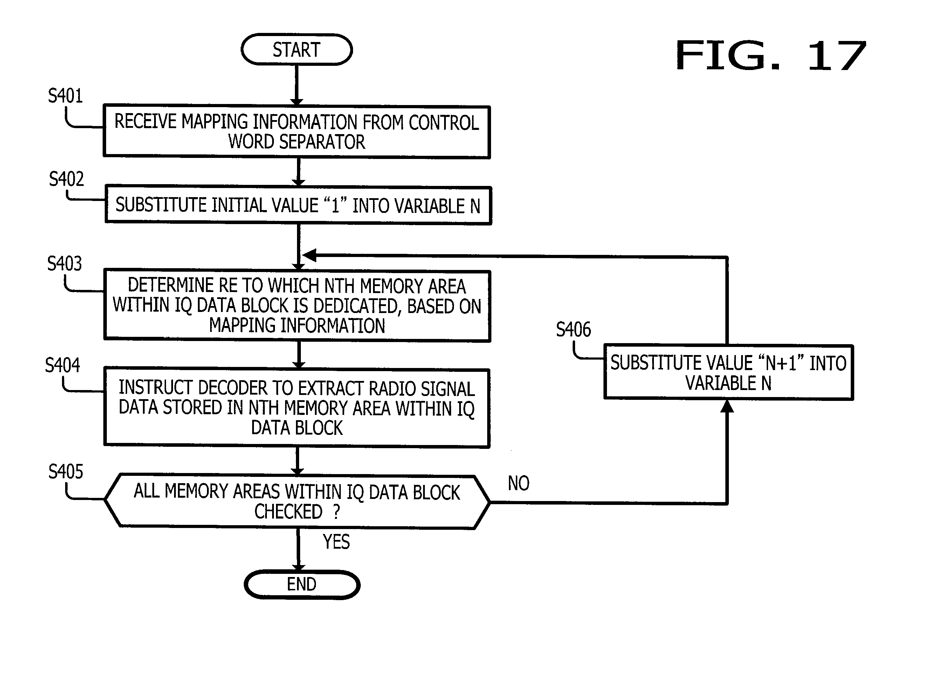

FIG 17 is a diagram illustrating an example of an operational flowchart performed by a scheduler of a radio-unit controller in the case of data transmission in an upward direction, according to an embodiment. The operational flowchart of FIG. 17 may be invoked when scheduler 270 has received the mapping information from an RE adjacent in a downward direction along the cascade connection.

First uplink receiver 260 of REC 200 receives an IQ data block and control words from RE 300a. Then, first uplink receiver 260 sends the received IQ data block to demodulator 256 which then demodulates each of plural sets of radio signal data stored in the received IQ data block according to a demodulation scheme complying with the modulation scheme used by the transmitting side of the each of the plural sets of radio signal data. Further, first uplink receiver 260 sends the received control words to control word separator 258 which then extracts mapping information from the received control words and sends the extracted mapping information to scheduler 270.

As depicted in FIG. 17, scheduler 270 receives mapping information from control word separator 258 (S401), and substitutes initial value "1" into variable N (S402).

Scheduler 270 determines one of the plurality of REs to which radio signal data stored in the Nth memory area within the received IQ data block is dedicated (in other words, which one of the plurality of REs has received via the antenna thereof the radio signal data stored in the Nth memory area within the received IQ data block), based on the mapping information (S403). Scheduler 270 instructs decoder 254 to extract the radio signal data stored in the Nth memory area within the IQ data block, as radio signal data dedicated to the determined one of the plurality of REs (that is, as radio signal data received via the antenna of the determined one of the plurality of REs) (S404). Decoder 254 decodes a set of radio signal data demodulated by demodulator 256, based on a decoding scheme complying with the encoding scheme used on the transmitting side of the set of radio signal data, and extracts the decoded set of radio signal data for each of the plurality of REs from which the decoded set of radio signal data originate, based on the instruction received from scheduler 270. First demultiplexer 252 sends the set of radio signal data decoded by decoder 254 to one of uplink protocol handlers corresponding to an RE from which the set of radio signal data has originated.

Scheduler 270 determines whether the checking has been done for all the memory areas within the IQ data block (S405). When the checking has not been done for all the memory areas within the IQ data block (S405; NO), scheduler 270 substitutes value "N+1" into variable N (S406), and returns to operation S403. When the checking has been done for all the memory areas within the IQ data block (S405; YES), scheduler 270 ends processing thereof.

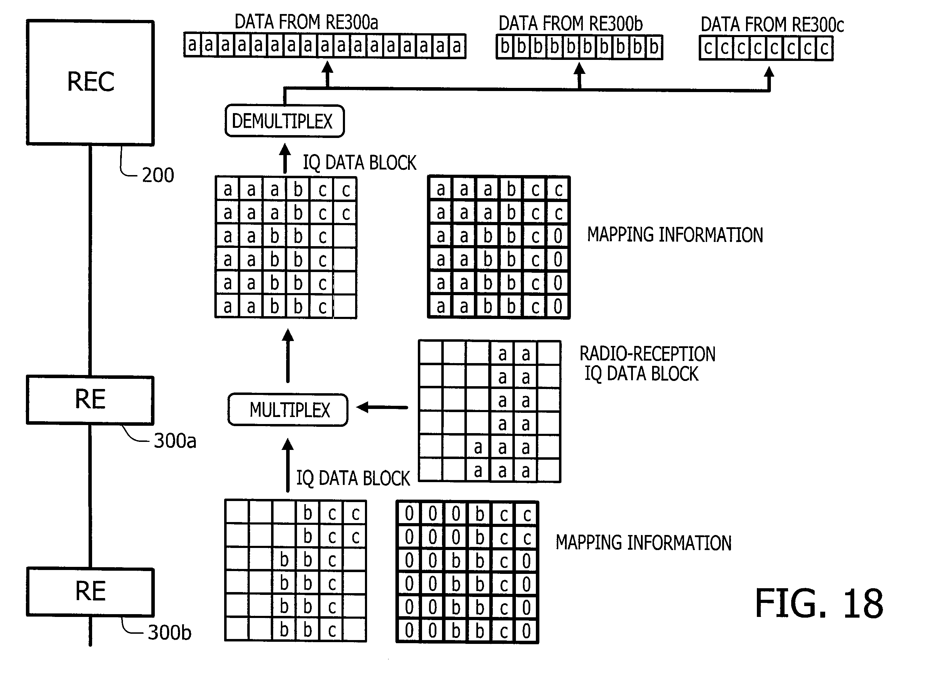

FIG 18 is a schematic diagram illustrating an example of data transmission in an upward direction, according to an embodiment. In FIG 18, a cell depicted within the IQ data block indicates a memory area within the IQ data block. And, cells labeled by "a", "b", and "c" within the IQ data block indicate sets of radio signal data dedicated to RE 300a, RE 300b, and RE 300c, respectively. Blank spaces in the cells within the IQ data block indicate that there exists no radio signal data stored in the corresponding memory areas. Cells depicted within mapping information correspond to memory areas within the IQ data block, on the one-to-one basis. Cells labeled by "a", "b", and "c" within the mapping information indicate that the corresponding memory areas within the IQ data block are dedicated to RE 300a, RE 300b, and RE 300c, respectively. Cells labeled by "0" within the mapping information indicate that the corresponding memory areas within the IQ data block are not used currently.

RE 300a receives an IQ data block and control words including mapping information from RE 300b adjacent in the downward direction along the cascade connection. In the example of FIG 18, two sets of radio signal data received via the antennas of RE 300b and RE 300c to which RE 300a is connected in the downward direction along the cascade connection, are combined into the IQ data block. Further, the mapping information stores information indicating which one of memory areas within the IQ data block is dedicated to which one of the plurality of REs.

RE 300a receives a set of radio signal data via antenna 380a from a communication device such as a mobile terminal, and the received set of radio signal data is stored into memory areas within a radio-reception IQ data block which is sent to second multiplexer 344 of RE 300a. Here, memory areas within the radio-reception IQ data block may be allocated to a set of radio signal data received via antenna 380a, based on a given agreement between RE 300a and the mobile terminal. Therefore, the arrangement of memory areas within the radio-reception IQ data block may be different from the arrangement of memory areas within the IQ data block received from RE 300b. In the example depicted in FIG. 18, cells labeled by "a" within the radio-reception IQ data block mean memory areas storing the set of radio signal data received via antenna 380a, and cells labeled by blank spaces within the radio-reception IQ data block mean memory areas in which there exist no radio signal data stored.

RE 300a combines a set of radio signal data received via antenna 380a into the IQ data block received from RE 300b. When there exist free memory areas within the IQ data block received from RE 300b that correspond to memory areas within the radio-reception IQ data block storing the set of radio signal data received via antenna 380a, RE 300a allocates the free memory areas within the IQ data block to the set of radio signal data received via antenna 380a.

As mentioned above, the arrangement of memory areas within the radio-reception IQ data block may be different from the arrangement of memory areas within the IQ data block received from RE 300b. Therefore, memory areas within the IQ data block received from RE 300b that correspond to the memory areas within the radio-reception IQ data block used for storing the set of radio signal data received via antenna 380a, may be already being used. When the corresponding memory areas within the IQ data block received from RE 300b are already used, RE 300a allocates other memory areas not used within the IQ data block received from RE 300b to the set of radio signal data received via antenna 380a, as depicted in the example of FIG 18. RE 300a updates mapping information by adding information on the memory areas that have been allocated to the set of radio signal data received via antenna 380a to the mapping information received from RE 300b. RE 300a updates the IQ data block by storing the radio signal data received from a mobile terminal via antenna 380a into the allocated memory areas within the IQ data block. RE 300a transmits the updated IQ data block and the control words including the updated mapping information to REC 200.

REC 200 receives the updated IQ data block and the control words including the updated mapping information from RE 300a. Then, REC 200 separates the received IQ data block into three sets of radio signal data each dedicated to one of the plurality of REs (RE 300a, RE 300b, and RE 300c)

As described above, in the case of data transmission in a downward direction, REC 200 generates mapping information indicating which memory areas within an IQ data block is dedicated to which one of a plurality of REs, and combines plural sets of radio signal data each dedicated to one of the plurality of REs into one radio signal data block, for example, one IQ data block. This allows REC 200 to transmit plural sets of radio signal data each dedicated to one of the plurality of REs, via one communication channel to each of the plurality of REs.

Each of the plurality of REs receives, from REC 200, an IQ data block and control words including mapping information. Then, the each of the plurality of REs extracts a set of radio signal data dedicated to the own equipment from the received IQ data block using the mapping information.

Further, in the case of data transmission in an upward direction, each of a plurality of REs receives an IQ data block and mapping information from an RE adjacent in the downward direction along the cascade connection, and updates the received mapping information so that free memory areas within the IQ data block are allocated to a set of radio signal data received from a mobile terminal via the antenna of the each of the plurality of REs. The each of the plurality of REs stores the set of radio signal data received via the antenna thereof into the allocated free memory areas within the IQ data block received from the adjacent RE in the downward direction. REC 200 receives the updated IQ data block and the updated mapping information from an RE adjacent in the downward direction along the cascade connection, and separates the received IQ data block into plural sets of radio signal data each dedicated to one of the plurality of REs.

According to the above mentioned embodiments, plural sets of radio signal data each dedicated to one of a plurality of REs are combined into one radio signal data block, and the combined radio signal data block is transmitted via one communication channel, thereby allowing effective use of communication bandwidth between a radio-unit controller and a plurality of radio units.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) of the present inventions have been described in detail, it should be understood that the various changes, substitutions, and alterations could be made hereto without departing from the spirit and scope of the invention.

## Claims

1. An apparatus comprising:
a plurality of radio units each configured to transmit a set of radio signal data via an antenna provided for the each of the plurality of radio units; and
a radio-unit controller configured to control transmission of radio signal data between the radio-unit controller and the plurality of radio units, the radio-unit controller and the plurality of radio units being connected with each other via a cascade connection in which the radio-unit controller is connected in series to the each of the plurality of radio units, the radio-unit controller including:
a first multiplexer configured to combine plural sets of radio signal data into a radio signal data block, each of the plural sets of radio signal data being destined for a radio unit that is to transmit via an antenna the each of the plural sets of radio signal data,
a control ward generator configured to generate mapping information storing position information of memory areas within the radio signal data block that are used for storing the each of the plural sets of radio signal data, in association with a radio-unit identifier identifying a radio unit that is to transmit via an antenna the each of the plural sets of radio signal data, and
a first downlink transmitter configured to transmit the combined radio signal data block and the generated mapping information to a radio unit adjacent in a downward direction along the cascade connection, the downward direction indicating a direction from the radio-unit controller towards the plurality of radio units along the cascade connection, wherein
the radio signal data block and the mapping information are transmitted from the radio-unit controller to the each of the plurality of radio units in the downward direction along the cascade connection, and the each of the plurality of radio units extracts, based on the mapping information, a set of radio signal data stored in memory areas within the received radio signal data block that are associated with a radio-unit identifier identifying the each of the plurality of radio units, so as to transmit the extracted set of radio signal data via an antenna provided for the each of the plurality of radio units.

2. The apparatus of claim 1, wherein
the each of the plurality of radio units includes:
a downlink receiver configured to receive the radio signal data block and the mapping information from the radio-unit controller or a radio unit adjacent in an upward direction along the cascade connection, the upward direction indicating a direction from the plurality of radio units towards the radio-unit controller along the cascade connection,
a demultiplexer configured to extract, based on the mapping information, a set of radio signal data destined for the each of the plurality of radio units from the radio signal data block received by the downlink receiver;
a radio transceiver configured to transmit the set of radio signal data extracted from the radio signal data block, via an antenna provided for the each of the plurality of radio units; and
a second downlink transmitter configured to transmit the radio signal data block received by the downlink receiver to a radio unit adjacent in the downward direction along the cascade connection.

3. The apparatus of claim 1, wherein
the mapping information stores, as a radio-unit identifier, a multi-address identifier identifying two or more radio units included in the plurality of radio units, and
the each of the plurality of radio units extracts, based on the mapping information, a set of radio signal data stored in memory areas within the received radio signal data block that are associated with the multi-address identifier, so as to transmit the extracted set of radio signal data via an antenna provided for the each of the plurality of radio units.

4. An apparatus comprising:
a plurality of radio units each configured to receive radio signal data via an antenna provided for the each of the plurality of radio units; and
a radio-unit controller configured to control transmission of radio signal data between the radio-unit controller and the plurality of radio units, the radio-unit controller and the plurality of radio units being connected with each other via a cascade connection in which the radio-unit controller is connected in series to the each of the plurality of radio units, the radio-unit controller including:
a first uplink receiver configured to receive a radio signal data block and mapping information from a radio unit adjacent in a downward direction along the cascade connection, the downward direction indicating a direction from the radio-unit controller towards the plurality of radio units along the cascade connection, the radio signal data block including memory areas for storing plural sets of radio signal data, each of the plural sets of radio signal data being received via an antenna by one of the plurality of radio units, mapping information storing position information of memory areas within the radio signal data block that are used for storing the each of the plural sets of radio signal data, in association with a radio-unit identifier identifying a radio unit that has received via an antenna the each of the plural sets of radio signal data, and
a first demultiplexer configured to extract, based on the received mapping information, the each of the plural sets of radio signal data from the received radio signal data block, wherein
the radio signal data block and the mapping information are transmitted from the each of the plurality of radio units to the radio-unit controller in an upward direction along the cascade connection, the upward direction indicating a direction from the plurality of radio units towards the radio-unit controller along the cascade connection, and
the each of the plurality of radio units combines a set of radio signal data received via an antenna provided for the each of the plurality of radio units into the radio signal data block received from a radio unit adjacent in the downward direction along the cascade connection, so as to transmits the combined radio signal data block to the radio-unit controller or a radio unit adjacent in the upward direction along the cascade connection.

5. The apparatus of claim 4, wherein
the each of the plurality of radio units includes:
a radio transceiver configured to receive a set of radio signal data via an antenna provided for the each of the plurality of radio units,
a second uplink receiver configured to receive the radio signal data block and the mapping information from a radio unit adjacent in a downward direction along the cascade connection, the downward
direction indicating a direction from the radio-unit controller towards the plurality of radio units along the cascade connection,
a control ward update unit configured to update the mapping information received by the second uplink receiver so that free memory areas within the radio signal data block are associated with the radio-unit identifier identifying the each of the plurality of radio units;
a multiplexer configured to combine the set of radio signal data received by the radio transceiver into the radio signal data block received by the second uplink receiver, by storing the set of radio signal data into free memory areas within the radio signal data block that are associated with a radio-unit identifier identifying the each of the plurality of radio units, based on the mapping information updated by the control ward update unit, and
an uplink transmitter configured to transmit the combined radio signal data block and the updated mapping information to the radio-unit controller or a radio unit adjacent in the upward direction along the cascade connection.

6. A method for transmitting radio signal data from a radio-unit controller to a plurality of radio units, the method comprising:
connecting the radio-unit controller to the plurality of radio units via a cascade connection in which the radio-unit controller is connected in series to each of the plurality of radio units;
combining, by the radio-unit controller, a plural sets of radio signal data into a radio signal data block, each of the plural sets of radio signal data being destined for a radio unit that is to transmit via an antenna the each of the plural sets of radio signal data;
generating, by the radio-unit controller, mapping information storing position information of memory areas within the radio signal data block that are used for storing the each of the plural sets of radio signal data, in association with a radio-unit identifier identifying a radio unit that is to transmit via an antenna the each of the plural sets of radio signal data;
transmitting, by the radio-unit controller, the combined radio signal data block and the generated mapping information to a radio unit adjacent in a downward direction along the cascade connection, the downward direction indicating a direction from the radio-unit controller towards the plurality of radio units along the cascade connection;
receiving, by the each of the plurality of radio units, the radio signal data block and the mapping information from the radio-unit controller or a radio unit adjacent in an upward direction along the cascade connection, the upward direction indicating a direction from the plurality of radio units towards the radio-unit controller along the cascade connection;
extracting, by the each of the plurality of radio units, based on the mapping information, a set of radio signal data stored in memory areas within the received radio signal data block that are associated with a radio-unit identifier identifying the each of the plurality of radio units;
transmitting, by the each of the plurality of radio units, the extracted set of radio signal data via an antenna provided for the each of the plurality of radio units; and
transmitting, by the each of the plurality of radio units, the radio signal data block and the mapping information to a radio unit adjacent in the downward direction along the cascade connection.

7. The method of claim 6, wherein
the mapping information includes, as a radio-unit identifier, a multi-address identifier identifying two or more radio units included in the plurality of radio units, and
the each of the plurality of radio units extracts, based on the mapping information, a set of radio signal data stored in memory areas within the radio signal data block that are associated with the multi-address identifier, and transmits the extracted set of radio signal data via an antenna provided for the each of the plurality of radio units.

8. A method for transmitting radio signal data from a plurality of radio units to a radio-unit controller, the method comprising:
connecting the radio-unit controller to the plurality of radio units via a cascade connection in which the radio-unit controller is connected in series to each of the plurality of radio units;
receiving, by the each of the plurality of radio units, a set of radio signal data via an antenna provided for the each of the plurality of radio units;
receiving, by the each of the plurality of radio units, a radio signal data block and mapping information from a radio unit adjacent in a downward direction along the cascade connection, the downward direction indicating a direction from the radio-unit controller towards the plurality of radio units along the cascade connection, the radio signal data block including memory areas for storing plural sets of radio signal data, each of the plural sets of radio signal data being received via an antenna by one of the plurality of radio units, mapping information storing position information of memory areas within the radio signal data block that are used for storing the each of the plural sets of radio signal data, in association with a radio-unit identifier identifying a radio unit that has received via an antenna the each of the plural sets of radio signal data;
updating, by the each of the plurality of radio units, the mapping information by associating free memory areas within the radio signal data block with a radio-unit identifier identifying the each of the plurality of radio units;
combining, by the each of the plurality of radio units, based on the updated mapping information, the set of radio signal data received via an antenna provided for the each of the plurality of radio units into the radio signal data block, by storing the received set of radio signal data into free memory areas within the radio signal data block that are associated with a radio-unit identifier identifying the each of the plurality of radio units;
transmitting, by the each of the plurality of radio units, the combined radio signal data block and the updated mapping information to the radio-unit controller or a radio unit adjacent in an upward direction along the cascade connection, the upward direction indicating a direction from the plurality of radio units towards the radio-unit controller along the cascade connection;
receiving, by the radio-unit controller, the radio signal data block and the mapping information from a radio unit adjacent in the downward direction along the cascade connection; and
extracting, by the radio-unit controller, based on the received mapping information, the set of radio signal data received via an antenna provided for the each of the plurality of radio units from the received radio signal data block.
